# EUROPÄISCHE PATENTSCHRIFT

(11) **EP 3 375 272 B1**
(45) Veröffentlichungstag und Bekanntmachung des Hinweises auf die Patenterteilung: **05.08.2020**
(21) Anmeldenummer: 18161333.2
(22) Anmeldetag: 12.03.2018
(51) Int. Cl.: A01B 29/04

(54) **PACKERWALZE ZUR BODENBEARBEITUNG**
PACKER ROLLER FOR SOIL CULTIVATION
ROULEAUX DE COMPACTAGE POUR LE TRAVAIL DU SOL

(30) Priorität: 14.03.2017 DE 102017105403
(43) Veröffentlichungstag der Anmeldung: 19.09.2018
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- EP-A1- 2 177 098
- EP-A1- 2 386 196
- EP-B1- 0 998 185
- EP-B1- 2 433 481
- WO-A1-2012/060770
- WO-A1-2017/188885
- DE-U1-202013 009 670

## Beschreibung

Die vorliegende Erfindung betrifft eine Packerwalze zur Bodenbearbeitung mit den Merkmalen des unabhängigen Anspruchs 1, die insbesondere für einen landwirtschaftlichen Einsatz vorgesehen bzw. geeignet ist.

Eine derartige Packerwalze ist bspw. durch die EP 2 433 481 B1 bekannt. Die hier offenbarte Packerwalze besteht zunächst aus einem horizontal verlaufenden Trägerprofil, welches mittels einer Lagereinheit drehbar an einer landwirtschaftlichen Maschine gelagert ist. Am Trägerprofil sind mittels Speichen eine Mehrzahl mit dem Trägerprofil rotierende Federelemente angeordnet. Die an den Speichen befestigten Federelemente bilden eine kreisförmige Umfangs- bzw. Lauffläche und sind jeweils derartig elastisch ausgebildet, dass mittels der Federelemente eine gezielte Rückverfestigung erreicht sowie eine krümelige Bodenstruktur geschaffen wird. Die Speichen stellen eine feste Verbindung zwischen dem Trägerprofil und dem jeweiligen Federelement dar, wobei die Speiche am Trägerprofil verschweißt ist und mittels einer Schraub- und/oder Laschenverbindung starr mit der Innenmantelfläche des Federelements verbunden ist. Da zur Verbindung der Federelemente mit dem Trägerprofil jeweils zumindest zwei Speichen erforderlich sind, welche Speichen mit dem Trägerprofil verschweißt sind, ist die Packerwalze sehr teileintensiv und durch die Vielzahl an anzuschweißenden Speichen auch entsprechend kostenintensiv. Des Weiteren ist ein einfaches bzw. problemloses Wechseln von Teilen durch die verschweißten Speichen bei beschädigten Packerwalzen oder Trägerprofilen nicht möglich bzw. nur durch großen Aufwand möglich, was jedoch nicht praxistauglich ist.

Eine andere Ausführungsvariante einer Packerwalze geht aus der EP 2 386 196 A1 hervor. Um den Schweißaufwand zu minimieren sowie um eine einfache Wechselbarkeit von defekten Bauteilen zu erreichen, ist vorgesehen, dass die Speichen der Packerwalze als Viertelringsegmente ausgebildet sind, welche gegenseitig verschraubt werden sowie an einem Trägerprofil geklemmt werden. Die Klemmung der Viertelringsegmente mit dem Trägerprofil hat sich jedoch als nicht praxistauglich herausgestellt, da die Klemmkräfte mitunter zu gering sind und die Viertelringsegmente sich axial am Trägerprofil verschieben. Dies wird insbesondere durch die hohen Belastungen, welche auf die Packerwalze während einer Bodenbearbeitung wirken, hervorgerufen. Darüber hinaus sind durch die Ausgestaltung der Packerwalze mit Viertelringsegmenten und jeweils einem Federelement jeweils wenigstens fünf Teile zur Schaffung eines Packerrings nötig, wodurch wiederum der Teileaufwand sehr hoch und somit die Packerwalze sehr kostenintensiv ist.

Eine weitere Packerwalze, bei welcher auf die Speichen gänzlich verzichtet wird, geht aus der WO 2012/060770 A1 sowie aus der EP 0 998 185 B1 hervor. Bei beiden Dokumenten werden jeweils wenigstens zwei Federelemente derartig mit einem Trägerprofil verschraubt, dass diese eine kreisförmige Lauffläche bzw. einen Packerring bilden. Die Speichen sind hierbei jeweils durch einen Abschnitt des Federelements gebildet. Auch derartige Federelemente weisen jedoch den Nachteil auf, dass diese die durch die Bodenbearbeitung hervorgerufenen hohen Belastungen nur bedingt aufnehmen können und es hierbei immer wieder zu Beschädigungen der Federelemente kommen kann. Die Federelemente bzw. den die Speiche bildenden Abschnitt, bspw. durch eine Querschnittserhöhung, so auszugestalten, dass dieser höheren Belastungen standhält, ist nur bedingt möglich, da dies auch eine Veränderung der elastischen Eigenschaften der, die Lauffläche bildenden Abschnitte zur Folge hätte, wodurch wiederum die mittels der Packerwalze durchgeführte Bodenbearbeitung bzw. Rückverfestigung verschlechtert wird. Auch würde dies zu einer ungewollten Gewichtserhöhung führen, wodurch wiederum die auf die die Packerwalze nutzende landwirtschaftliche Maschine wirkenden Kräfte und Belastungen erhöht werden würden.

Die in der WO 2012/060770 A1 gezeigten Federelemente weisen Montageflächen auf, welche korrespondierend zum Umfang des Trägerprofils ausgebildet sind und am Außenumfang des Trägerprofils anliegen. Die Befestigung der Federelemente am Trägerprofil erfolgt dabei derart, dass Befestigungsmittel das Trägerprofil durchdringen und jeweils die beiden gegenüberliegenden Montageflächen der zwei Federelemente miteinander verbinden. Es hat sich jedoch als nachteilig erwiesen, dass die radialen Stege bzw. Abschnitte nicht durch weitere Befestigungsmittel miteinander verbunden werden. Dadurch wird die Stabilität der Ringe im Feldeinsatz deutlich reduziert und verschlechtert.

Bei der Ausführungsform der EP 0 998 185 B1 erstrecken sich vom Trägerprofil jeweils Träger bzw. Flansche, welche mit dem Rohrumfang des Trägerprofils fest verbunden bzw. verschweißt sind. An die Träger bzw. Flansche sind Verfestigungselemente bzw. Federelemente befestigbar, welche jeweils aus einem inneren, radial nach außen verlaufenden Abschnitt und einem äußeren, in Teilkreisform ausgebildeten Abschnitt bestehen. Der innere Abschnitt ist dabei insbesondere am Träger bzw. am Flansch angeschraubt, angenietet oder dergleichen. Durch die starr am Trägerprofil angeschweißten Träger bzw. Flansche werden die flexiblen und/oder elastischen Eigenschaften der Packerwalze reduziert.

Durch die EP 2 177 098 A1 ist eine Vorrichtung zum Vorbereiten des Bodens zum Säen und zum Ausbringen von Saatgut offenbart. Die Vorrichtung umfasst rotierende Räumwerkzeuge in Walzen- oder Reifenform, wie beispielsweise ein Stempelwerkzeug. Das rotierende Räumwerkzeug besteht aus einzelnen zueinander beabstandeten Ringen, welche eine geschlossene oder teilweise unterbrochene walzenförmige Umfangsfläche bzw. einen Umfangsring ausbilden. Die Ringe umfassen jeweils eine Speiche, welche jeweils mit ihrer Stirnseite an einem durchgehenden, quer zur Arbeitsrichtung vorgesehenen Trägerprofil verschweißt sind. Das Verschweißen der Speichen am Trägerprofil bringt die Nachteile mit sich, dass die federnden und elastischen Eigenschaften der Ringe eingeschränkt und reduziert werden sowie dass die Schweißstellen bei höheren Belastungen brechen.

Ausgehend vom bekannten Stand der Technik liegt der Erfindung die Aufgabe zugrunde, eine vereinfacht und mit geringem Teileaufwand herstellbare und damit kostengünstig herstellbare Packerwalze vorzuschlagen, welche eine effektive Bodenbearbeitung ermöglicht und eine verbesserte Stabilität aufweist.

Diese Aufgabe wird erfindungsgemäß durch eine Packerwalze mit den Merkmalen des unabhängigen Anspruchs 1 gelöst. Merkmale vorteilhafter Weiterbildungen der Erfindung lassen sich den abhängigen Ansprüchen entnehmen.

Zur Lösung der genannten Aufgaben schlägt die Erfindung eine Packerwalze zur Bodenbearbeitung vor, welche Packerwalze insbesondere in landwirtschaftlichen Maschinen zur Bodenbearbeitung und/oder Aussaat von Verteilgut Verwendung findet und zur Rückverfestigung eines vorher gelockerten Ackerbodens sowie zur Erzeugung einer fein krümeligen Bodenstruktur dient. Auch kann die Packerwalze zur Tiefenführung der jeweiligen landwirtschaftlichen Maschine dienen. Die Packerwalze ist insbesondere drehbar an der landwirtschaftlichen Maschine gelagert und weist ein Trägerprofil auf, an welchem jeweils, vorzugsweise regelmäßig, beabstandet zueinander eine Mehrzahl von Federelementen angeordnet sind. Dem Trägerprofil kann stirnseitig jeweils ein Lagerflansch zugeordnet sein, mittels welchem die Packerwalze bspw. an einer Rahmenkonstruktion einer landwirtschaftlichen Maschine drehbar montierbar ist. Der Lagerflansch kann hierbei sowohl mit dem Trägerprofil kraft-, stoff- und/oder formschlüssig, insbesondere verschweißt als auch verschraubt sein, aber auch auf andere Weise mit diesem verbunden sein. Der Lagerflansch kann zudem einen runden Innenquerschnitt aufweisen, um bspw. die Montage einer Lagerung zu vereinfachen.

Die Federelemente sind jeweils derartig ausgeführt, dass jeweils zumindest zwei, drei oder mehr gegenüberliegende bzw. verbundene Federelemente eine zumindest weitgehend kreisförmige bzw. eine kreisförmige Lauffläche bzw. einen Packerring bilden. Die Federelemente weisen jeweils zumindest eine äußere im Wesentlichen kreisförmige Umfangsfläche, zwei innere der Kontur des Trägerprofils zumindest abschnittsweise entsprechende Montageflächen, sowie zwei sich zwischen der äußeren Umfangsfläche sowie der inneren Montagefläche erstreckende Verbindungsflächen auf. Die Verbindungsflächen bzw. Verbindungsabschnitte können jeweils radial und/oder in einem bestimmten Winkel zwischen der inneren Montagefläche und der äußeren Umfangsfläche angeordnet sein. Die Montageflächen weisen jeweils wenigstens eine Bohrung oder dergl. Öffnung oder Ausschnitt auf, mittels welcher die jeweils wenigstens zwei Federelemente am Trägerprofil anbringbar, vorzugsweise anschraubbar sind, wobei hierzu zumindest ein Montageelement mit dem Trägerprofil und mit zumindest einem Federelement verbunden wird. Bei dem zumindest einen Montageelement kann es sich um eine Schraube oder dergleichen handeln. Damit wäre es denkbar, dass eine Schraube durch das Trägerprofil hindurchgesteckt bzw. hindurchgeführt wird und mittels einer Schraube jeweils zwei gegenüberliegende Federelemente mit dem Trägerprofil verschraubt bzw. fixiert werden. Auch andere Montageelemente sind wie bspw. Nieten, Bolzen oder dergl. denkbar, wobei jedoch Schrauben bzw. lösbare Montageelemente bevorzugt Verwendung finden, um somit eine einfache und schnelle Montage bzw. Wechselbarkeit von defekten Federelementen zu ermöglichen sowie um den generellen Montageaufwand möglichst gering zu halten. Da die zumindest zwei Federelemente über die Verbindungsstellen mit zumindest einem Montageelement verbunden werden, sind damit keine Stege oder Speichen, wie es aus dem Stand der Technik bekannt ist, erforderlich.

Erfindungsgemäß ist vorgesehen, dass die Montageflächen zumindest abschnittsweise mit dem Außenumfang des Trägerprofils in Oberflächenkontakt stehen und/oder bündig auf dem Außenumfang des Trägerprofils aufliegen.

Eine sinnvolle Ausführungsvariante der erfindungsgemäßen Packerwalze zur Bodenbearbeitung kann zumindest ein rotierbares, eine Trägerwelle bildendes Trägerprofil vorsehen, die/das eine Mehrzahl von in Längserstreckungsrichtung der Trägerwelle jeweils beabstandet voneinander angeordnete Federelemente mit jeweils ringsegmentförmigem Felgenabschnitt trägt. Die Trägerwelle ist normalerweise in einem Rahmenabschnitt einer landwirtschaftlichen Bodenbearbeitungsmaschine o. dgl. gelagert, so dass sie eine horizontale und quer zu einer Fahrt- oder Bewegungsrichtung liegende Drehachse aufweist bzw. um diese Drehachse rotierbar ist, wenn die Maschine über den Ackerboden bewegt wird. Die im vorliegenden Beschreibungszusammenhang auch als Trägerprofil bezeichnete Trägerwelle dient als zentraler Träger für eine Mehrzahl von regelmäßig oder unregelmäßig voneinander beabstandeten Federelementen, die nachfolgend näher beschrieben werden und deren zentrales Konstruktionsmerkmal einen ringsegmentförmigen Felgenabschnitt vorsieht, so dass mehrere aneinander gefügte Federelemente gemeinsam einen kreisringförmigen Felgenabschnitt bilden können, so dass die Mehrzahl von jeweils gleich dimensionierten Federelementen mit ihren kreisringförmigen Felgenabschnitten über die Breite die erfindungsgemäße Packerwalze ausbilden.

Gemäß einer besonders praktikablen Ausführungsvariante der erfindungsgemäßen Packerwalze zur Bodenbearbeitung kann vorgesehen sein, dass jeweils zumindest zwei in ungefähr gleicher axialer Position an der Trägerwelle bzw. am Trägerprofil gegenüberliegend angeordnete Federelemente mit ihren aneinander anschließenden ringsegmentförmigen Felgenabschnitten gemeinsam eine kreisförmige oder annähernd kreisförmige Lauffläche bilden. Ebenso denkbar ist es jedoch auch, dass bspw. drei in ungefähr gleicher axialer Position an der Trägerwelle bzw. am Trägerprofil gegenüberliegend angeordnete Federelemente mit ihren aneinander anschließenden ringsegmentförmigen Felgenabschnitten gemeinsam eine kreisförmige oder annähernd kreisförmige Lauffläche bilden.

Außerdem kann vorgesehen sein, dass die Federelemente jeweils einen Nabenbereich, zwei Speichenabschnitte und den ringsegmentförmigen Felgenabschnitt aufweisen, wobei die ringsegmentförmigen Felgenabschnitte eine äußere, im Wesentlichen kreisförmige oder kreissegmentförmige Umfangsfläche bilden, wenn sie in vorgesehener Weise aneinander gefügt sind, so dass sich die kreissegmentförmigen Umfangsflächen aneinander fügen. Darüber hinaus kann wahlweise vorgesehen sein, dass der Nabenbereich der Federelemente jeweils durch zwei innere, mit der Kontur der Trägerwelle bzw. des Trägerprofils zumindest abschnittsweise korrespondierende Montageflächen gebildet ist, und/oder dass die Speichenabschnitte jeweils durch zwei sich zwischen der äußeren Umfangsfläche bzw. dem Felgenabschnitt und der inneren Montagefläche bzw. dem Nabenbereich erstreckende Verbindungsflächen bzw. Verbindungsabschnitte gebildet sind. Die Speichenbereiche oder Speichenabschnitte mitsamt den Felgenabschnitten sorgen in konstruktiver Weise für die gewünschte Elastizität und Bruchsicherheit bei gleichzeitiger hoher Stabilität der gesamten Packerwalzenkonstruktion.

Weiterhin kann bei der erfindungsgemäßen Packerwalze vorgesehen sein, dass die Montageflächen im Nabenbereich jeweils wenigstens eine Bohrung oder einen Ausschnitt aufweisen, mittels derer die jeweils wenigstens zwei Federelemente an der Trägerwelle bzw. am Trägerprofil anbringbar, insbesondere lösbar fixiert bzw. verschraubt sind, wobei hierzu zumindest ein Montageelement mit der Trägerwelle bzw. dem Trägerprofil und zumindest einem Federelement verbunden sein kann. Gemäß einer sinnvollen Ausführungsvariante ist zudem vorgesehen, dass die Verbindungsflächen bzw. Speichenabschnitte bzw. Verbindungsabschnitte jeweils wenigstens eine zusätzliche Verbindungsstelle aufweisen, mittels derer jeweils zwei gegenüberliegende Federelemente aneinander fixiert und/oder miteinander verschraubt sein können.

Um die Umfangsfläche so auszuführen, dass diese eine ausreichende Elastizität für eine gezielte Rückverfestigung erreicht und dass mittels dieser eine krümelige Bodenstruktur geschaffen wird, und um eine ausreichende Stabilität des Federelements für die bei der Bodenbearbeitung hervorgerufenen Belastungen zu schaffen, ist vorgesehen, dass die Verbindungsflächen bzw. der Verbindungsabschnitt von zwei gegenüberliegenden Federelementen jeweils wenigstens eine zusätzliche Verbindungsstelle aufweisen. Die Verbindungsflächen bzw. die Verbindungsabschnitte können zusätzliche Bohrungen oder dergl. Öffnungen umfassen, mittels derer die gegenüberliegenden Federelemente gemeinsam verschraubt bzw. gemeinsam verbunden werden, d.h. die zusätzlichen Bohrungen oder dergl. Öffnungen können vorzugsweise zumindest näherungsweise gegenüberliegend angeordnet und/oder ausgerichtet sein. Die verbundenen Verbindungsflächen bzw. die verbundenen Federelemente weisen somit die Stabilitätseigenschaften einer Packerwalze auf, welche mit Speichen ausgeführt ist. Es werden hierzu jedoch keine zusätzlichen Bauteile oder Komponenten benötigt bzw. es wird keinen zusätzlichen Schweißaufwand benötigt, wodurch eine vereinfachte und mit geringem Teileaufwand herstellbare und damit kostengünstig herstellbare Packerwalze geschaffen wird. Mit der zusätzlichen Verbindung der Verbindungsflächen bzw. der Verbindungsabschnitte kann somit die die auf die Federelemente einwirkenden Kräfte aufnehmende Fläche der Verbindungsflächen bzw. der Verbindungsabschnitte verdoppelt werden, ohne hierfür zusätzliche Teile bzw. Speichen oder dergl. zu benötigen. Ist bspw. ein Federelement aus einem Flachmaterial gebildet und weist eine Materialstärke von 5 mm auf, kann deren Materialstärke durch die zusätzliche Verbindung somit auf 10 mm erhöht werden, wodurch sich auch das Widerstandsmoment wiederum entsprechend vergrößert.

Die Verbindung der wenigstens zwei gegenüberliegenden Federelemente kann mittels diverser Verbindungselemente wie bspw. Schrauben erfolgen. Neben der Verwendung von Schrauben wären hier jedoch auch andere Verbindungselemente wie bspw. Nieten, Bolzen oder dergl. denkbar, wobei jedoch Schrauben bzw. lösbare Verbindungselemente bevorzugt Verwendung finden, um somit eine einfache und schnelle Montage bzw. Wechselbarkeit von defekten Federelementen zu ermöglichen.

Es kann vorgesehen sein, dass die Verbindungsflächen bzw. Verbindungsabschnitte der zumindest zwei Federelemente zumindest abschnittsweise miteinander in Oberflächenkontakt stehen und/oder bündig aufeinander liegen. Damit können die Verbindungsflächen bzw. Verbindungsabschnitte mittels zumindest einem Verbindungselement direkt miteinander verbunden werden.

Wahlweise können die Verbindungsabschnitte zueinander beabstandet angeordnet sein. Bei dieser Ausführungsform kann beispielsweise das Trägerprofil zumindest abschnittsweise zwischen den Verbindungsabschnitten vorgesehen sein. Wahlweise wären andere Beabstandungselemente denkbar.

Um die bei der Bodenbearbeitung auf die Federelemente einwirkenden Kräfte aufnehmen zu können und eine ausreichende Stabilität der Federelemente bzw. der Packerwalze zu erreichen sowie um ein Auseinanderklaffen der wenigstens zwei gegenüberliegenden Federelemente zu vermeiden, kann vorgesehen sein, dass die wenigstens eine zusätzliche Verbindungsstelle in einem Bereich angeordnet ist, der innerhalb des Außendurchmessers der Umfangsfläche liegt und der außerhalb oder gleich einem halben Außendurchmesser der Umfangsfläche ist. Weist bspw. die Packerwalze einen Durchmesser von 600 mm auf, so kann deren Verbindungsstelle in einem Bereich der 300 mm oder größer ist angeordnet sein. Auch wäre es denkbar, dass die wenigstens eine zusätzliche Verbindungsstelle in einem Bereich angeordnet ist, der innerhalb oder gleich einem halben Außendurchmesser der Umfangsfläche ist. Weist bspw. die Packerwalze einen Durchmesser von 600 mm auf, so kann deren Verbindungsstelle in einem Bereich der 300 mm oder kleiner ist angeordnet sein. Auch denkbar wäre es, zwei oder mehr zusätzliche Bohrungen bzw. Verbindungsstellen in den wenigstens zwei gegenüberliegenden Federelemente zu haben, wobei die Positionen jeweils derartig gewählt sind, dass ein Auseinanderklaffen der gegenüberliegenden Federelemente bei auf diesen wirkenden Belastungen unterbunden werden kann.

Es kann vorgesehen sein, dass jeweils zwei gegenüberliegende Federelemente mittels wenigstens einem durch das Trägerprofil hindurchragendem bzw. durchgestecktem Montageelement mit dem Trägerprofil verbunden werden, wobei dies auch mittels zwei oder mehr Montageelementen erfolgen kann, wobei bei einer derartigen Ausführung die Montageelemente axial entlang des Trägerprofils zueinander versetzt sein können. Ebenso können die Montageelemente jeweils durch ein Zentrum des Trägerprofils hindurchgesteckt bzw. hindurchgeführt werden oder außerhalb des Zentrums hindurchgesteckt bzw. hindurchgeführt werden. Dabei können jeweils gegenüberliegende Federelemente durch ein gemeinsames Montageelement miteinander verbunden werden. Bei derartigen Ausführungsvarianten finden als Montageelemente insbesondere Schrauben Verwendung. Auch wäre es denkbar, dass das Trägerprofil jeweils mit Gewinden versehen ist und die Montage der Federelemente mittels dieser Gewinde erfolgt.

Das Trägerprofil kann auf verschiedenste Art und Weise, wie bspw. als Rohr oder als Rundmaterial bzw. als Rohrprofil, aber auch als quadratisches Profil oder als Hohlprofil, ausgeführt sein. Auch kann das Trägerprofil einen runden, eckigen oder dergl. Querschnitt aufweisen. Auch eine Kombination aus z.B. einem Hohlprofil und einem Flachstahl wäre denkbar. Auch zwei zu einem Trägerprofil verbundene Blechelemente oder Profilelemente können bspw. mittels Schrauben oder Schweißen oder Nieten oder dergl. Elemente zu einem Trägerprofil verbunden werden. Da die Kontur der Montagefläche jedoch zumindest abschnittsweise der Kontur des Trägerprofils entspricht, finden als Trägerprofile insbesondere quadratische Profile bzw. Hohlprofile Verwendung, da somit die Fertigung der Federelemente gegenüber bspw. runden Trägerprofilen wesentlich vereinfacht werden kann.

Auch kann vorgesehen sein, dass die Montageflächen sowie die Verbindungsflächen bzw. die Verbindungsabschnitte jeweils durch einen gemeinsamen Abschnitt der Federelemente gebildet werden.

Darüber hinaus sind zwischen den Montageflächen und den Verbindungsflächen bzw. den Verbindungsabschnitten und der Umfangsfläche jeweils insbesondere bogenförmige Verbindungsabschnitte angeordnet, um somit die jeweiligen Flächen zu verbinden bzw. um somit ein zusammenhängendes Federelement zu schaffen. Dabei bilden jeweils wiederum wenigstens zwei derartig gegenüberliegende Federelemente jeweils einen Packerring.

In einer bevorzugten Ausführungsform kann die Packerwalze aus einem Trägerprofil bestehen, an welchem Trägerprofil zwei identische und gegenüberliegende Federelemente angebaut sind, wobei am Trägerprofil beabstandet zueinander eine Mehrzahl derartiger Federelemente angebaut sein können. Die Federelemente können hierbei jeweils einen Packerring ausbilden. Die Federelemente können jeweils eine kreisförmige Umfangsfläche aufweisen, wobei zwei der Konturen des Trägerprofils zumindest abschnittsweise entsprechende Montageabschnitte sowie zwei sich zwischen der Umfangsfläche und den Montageflächen jeweils erstreckende Verbindungsflächen bzw. Verbindungsabschnitte aufweisen. Dabei können die Umfangsflächen jeweils eine weitgehend kreisförmige Lauffläche bilden sowie die Montageflächen jeweils mit dem Trägerprofil verbunden sein. Um eine möglichst einfache Kontur der Montageflächen zu erhalten, kann vorgesehen sein, dass das Trägerprofil als quadratisches Profil bzw. Hohlprofil ausgeführt ist. Des Weiteren können die jeweils gegenüberliegenden Verbindungsflächen bzw. Verbindungsabschnitte wenigstens eine zusätzliche Verbindungsstelle aufweisen, wobei hierbei mittels zusätzlichen Verbindungselementen in Form von bspw. einer Schraube die gegenüberliegenden Verbindungsflächen jeweils verbunden werden, um somit eine ausreichende Stabilität der Packerwalze zu erhalten, ohne hierfür einen hohen Teileaufwand zu benötigen. Die wenigstens zwei gegenüberliegenden Federelemente können insbesondere in Bezug auf den Außendurchmesser der Umfangsfläche in einem äußeren Drittel und in einem inneren Drittel der Verbindungsfläche bzw. des Verbindungsabschnitts verbunden werden. Jedoch wäre auch eine Verbindung in der Mitte der Verbindungsfläche bzw. des Verbindungsabschnitts möglich. Dabei kann mit Hilfe der Verbindung der Verbindungsflächen bzw. der Verbindungsabschnitte jeweils die als Speiche dienende und die durch die Verbindungsflächen bzw. der Verbindungsabschnitte gebildete und die die auf die Packerwalze wirkende Kräfte aufnehmende Verbindungsfläche der Federelemente verdoppelt werden, ohne hierfür eine besondere Ausführung des Trägerprofils oder der Federelemente zu benötigen.

Zumindest zwei benachbarte und sich aus jeweils zumindest zwei gegenüberliegenden Federelemente bildende kreisförmigen Laufflächen bzw. Packerringe können jeweils um bspw. 30° oder 45° oder 90° radial zueinander verdreht angeordnet sein. Dies hat den Vorteil, dass trotz der sich durch die wenigstens zwei gegenüberliegenden Federelemente unterbrochene kreisförmige Lauffläche eine laufruhige Packerwalze geschaffen ist, da die unterbrochene Lauffläche jeweils durch eine radial verdreht zu dieser angeordneten Lauffläche überbrückt wird. Auch kann somit die Stabilität der Packerwalze bzw. der Federelemente wesentlich erhöht werden, da eine Umfangsfläche durch bspw. zwei benachbarte zu dieser angeordnete und verbundene Verbindungsflächen bzw. Verbindungsabschnitte abgestützt wird. Der jeweilige Winkel, um welchen die Federelemente zueinander verdreht sind, kann bspw. abhängig von der Anzahl an jeweils gegenüberliegenden und eine Lauffläche bildenden Federelemente sein. Wird eine Lauffläche bspw. nur durch zwei gegenüberliegende Federelemente gebildet, kann eine radiale Verdrehung von bspw. 90° verwendet werden. Darüber hinaus kann eine radiale Verdrehung auch wiederum vom Trägerprofil abhängen. Ist das Trägerprofil bspw. als quadratisches Hohlprofil aufgeführt, ist auch hierbei wiederum eine Verdrehung von 90° optimal bzw. am einfachsten auszuführen, da somit keine separaten bzw. anders ausgeführte Federelemente benötigt werden. Auch können die benachbarten Federelemente zueinander um verschiedenste Winkel zueinander verdreht werden, so dass jeweils wenigstens zwei benachbarte und verbundene Verbindungsflächen bzw. Verbindungsabschnitte die Packerwalze abstützen.

Die Umfangsfläche bzw. das Federelement kann jeweils verschiedenste Konturen aufweisen. Denkbaren wären bspw. eine flache, eine V-förmige, eine U-förmige, eine T-förmige Kontur oder dergl., wobei jedoch bevorzugt flache Umfangsflächen Verwendung finden, da bei derartigen das Federelement am einfachsten zu fertigen ist. Auch denkbar wäre es, nur einzelne Flächen mit einer aufgeprägten Kontur zu versehen. So wäre es denkbar, dass bspw. die Umfangsfläche sowie die Montageflächen eine flache Kontur aufweisen sowie die Verbindungsfläche bzw. der Verbindungsabschnitt bspw. eine quadratische oder dreieckige oder dergl. Kontur aufweisen. Auch kreisförmig ausgeprägte Konturen wären denkbar. Derartige Konturen im Bereich der Verbindungsfläche bzw. des Verbindungsabschnitts haben den Vorteil, dass durch die Verbindung der wenigstens zwei gegenüberliegenden Federelemente bspw. eine quadratische Kontur oder kreisförmige Kontur oder dergl. entsteht, wodurch die Stabilität bzw. die Festigkeit, durch das sich somit erhöhte Widerstandsmoment, der Packerwalze und derer Federelemente noch weiter verbessert werden kann. Die Ausprägung kann hierbei wiederum so gewählt werden, dass jeweils durch die Verbindung von zwei Verbindungsflächen bzw. Verbindungsabschnitten jeweils ein möglichst großes Widerstandsmoment erreicht wird. Neben den Verbindungsflächen bzw. Verbindungsabschnitten können jedoch auch noch die Montageflächen und/oder die Umfangsflächen eine Ausprägung aufweisen, wodurch somit auch diese eine erhöhte Stabilität aufweisen können.

Gemäß einem Ausführungsbeispiel kann das Trägerprofil aus einem Rohrprofil ausgebildet sein. An dem Rohr können jeweils mittels Montageelemente in Form von Schrauben zwei gegenüberliegende Federelemente derartig angeordnet werden, dass deren Umfangsflächen eine kreisförmige Lauffläche bzw. einen Packerring bilden. Die Federelemente weisen jeweils eine äußere im Wesentlichen kreisförmige Umfangsfläche zwei innere der Kontur des Trägerprofils zumindest abschnittsweise entsprechende Montageflächen sowie zwei sich zwischen der äußeren Umfangsfläche und der inneren Montagefläche jeweils erstreckende Verbindungsflächen bzw. Verbindungsabschnitte auf. Die Montagefläche kann entsprechend dem Umfang des Rohrprofils zumindest abschnittsweise kreisförmig ausgebildet sein, um somit eine einfache Montage der Federelemente am Trägerprofil zu gewährleisten, d.h. die Montagefläche kann zumindest abschnittsweise mit dem Außenumfang des Rohrprofils in Oberflächenkontakt stehen. Um die bei der Bodenbearbeitung auf die Federelemente einwirkenden Kräfte aufnehmen zu können bzw. ein ausreichende Stabilität der Federelemente zu erreichen, sowie ein Auseinanderklaffen der wenigstens zwei gegenüberliegende Federelemente zu verhindern, kann wenigstens eine zusätzliche Verbindungsstelle bzw. eine zusätzliche Bohrung in den Verbindungsflächen bzw. Verbindungsabschnitten angebracht sein, wodurch die jeweils zwei gegenüberliegenden Verbindungsflächen bzw. Verbindungsabschnitte zusätzlich verbunden werden. Damit kann die Stabilität wesentlich erhöht werden.

Gemäß einem weiteren Ausführungsbeispiel kann sich das Trägerprofil aus zwei Profilhälften beispielsweise in Form von Blechhälften zusammensetzen. Das Trägerprofil kann in einem mittleren Bereich einen quadratischen Querschnitt aufweisen, welcher in radialer Richtung nach außen in einen flachen Querschnitt übergeht. Am Trägerprofil können jeweils mittels Montageelemente in Form von Schrauben zwei gegenüberliegende Federelemente derartig angeordnet sein, dass deren Umfangsflächen eine kreisförmige Lauffläche bzw. einen Packerring bilden. Mittels dieser Montageelemente können auch die zwei Profilhälften verbunden werden, wobei diese auch verschweißt oder mittels anderer Montagemittel verbunden sein können. Dabei können die Montageflächen der Federelemente zumindest abschnittsweise mit dem Trägerprofil in Oberflächenkontakt stehen bzw. bündig aufliegen. Die Federelemente können jeweils eine äußere im Wesentlichen kreisförmige Umfangsfläche, zwei innere der Kontur des Trägerprofils zumindest abschnittsweise entsprechende Montageflächen sowie zwei sich zwischen der äußeren Umfangsfläche und der inneren Montagefläche jeweils erstreckende Verbindungsflächen bzw. Verbindungsabschnitte aufweisen. Um die bei der Bodenbearbeitung auf die Federelemente einwirkenden Kräfte aufnehmen zu können bzw. eine ausreichende Stabilität der Federelemente zu erreichen, sowie ein Auseinanderklaffen der wenigstens zwei gegenüberliegende Federelemente zu verhindern, kann wenigstens eine zusätzliche Verbindungsstelle bzw. eine zusätzliche Bohrung in den Verbindungsflächen bzw. Verbindungsabschnitten angebracht sein, wodurch die jeweils zwei gegenüberliegenden Verbindungsflächen bzw. Verbindungsabschnitte zusätzlich verbunden werden. Zusätzlich können die Federelemente mittels der Verbindungsstelle nochmals mit dem Trägerprofil verbunden werden, wodurch die Festigkeit der Packerwalze bzw. der Federelemente noch weiter erhöht werden kann.

Gemäß einem nicht zur Erfindung gehörenden Ausführungsbeispiel kann sich das Trägerprofil aus einem Flachmaterial sowie aus einem bzw. zwei Winkelmaterialien zusammensetzen. Das Trägerprofil kann in einem mittleren Bereich einen quadratischen Querschnitt aufweisen, welcher in radialer Richtung nach außen in einen flachen Querschnitt übergeht. Am Trägerprofil können jeweils mittels Montageelemente in Form von Schrauben zwei gegenüberliegende Federelemente derartig angeordnet sein, dass deren Umfangsflächen eine kreisförmige Lauffläche bzw. einen Packerring bilden. Dabei können die Montageflächen der Federelemente zumindest abschnittsweise mit dem Trägerprofil in Oberflächenkontakt stehen bzw. bündig aufliegen. Die Federelemente können jeweils eine äußere im Wesentlichen kreisförmige Umfangsfläche, zwei innere der Kontur des Trägerprofils zumindest abschnittsweise entsprechende Montageflächen sowie zwei sich zwischen der äußeren Umfangsfläche und der inneren Montagefläche jeweils erstreckende Verbindungsflächen bzw. Verbindungsabschnitte aufweisen. Um die bei der Bodenbearbeitung auf die Federelemente einwirkenden Kräfte aufnehmen zu können bzw. eine ausreichende Stabilität der Federelemente zu erreichen, sowie ein Auseinanderklaffen der wenigstens zwei gegenüberliegende Federelemente zu verhindern, kann wenigstens eine zusätzliche Verbindungsstelle bzw. eine zusätzliche Bohrung in den Verbindungsflächen bzw. Verbindungsabschnitten angebracht sein, wodurch die jeweils zwei gegenüberliegenden Verbindungsflächen bzw. Verbindungsabschnitte zusätzlich verbunden werden.

Gemäß einem weiteren nicht zur Erfindung gehörenden Ausführungsbeispiel kann sich das Trägerprofil aus einem Rohrprofil sowie jeweils um 90° zueinander versetzt angebrachte Flachmaterialien zusammensetzen. Das Trägerprofil kann in einem mittleren Bereich einen runden Querschnitt aufweisen, welcher in radialer Richtung nach außen in einen flachen Querschnitt übergeht. Am Trägerprofil können jeweils mittels Montageelemente in Form von Schrauben zwei gegenüberliegende Federelemente derartig angeordnet sein, dass deren Umfangsflächen eine kreisförmige Lauffläche bzw. einen Packerring bilden. Dabei können die Montageflächen der Federelemente zumindest abschnittsweise mit dem Trägerprofil in Oberflächenkontakt stehen bzw. bündig aufliegen. Die Federelemente können jeweils eine äußere im Wesentlichen kreisförmige Umfangsfläche, zwei innere der Kontur des Trägerprofils zumindest abschnittsweise entsprechende Montageflächen sowie zwei sich zwischen der äußeren Umfangsfläche und der inneren Montagefläche jeweils erstreckende Verbindungsflächen bzw. Verbindungsabschnitte aufweisen. Um die bei der Bodenbearbeitung auf die Federelemente einwirkenden Kräfte aufnehmen zu können bzw. ein ausreichende Stabilität der Federelemente zu erreichen, sowie ein Auseinanderklaffen der wenigstens zwei gegenüberliegende Federelemente zu verhindern, kann wenigstens eine zusätzliche Verbindungsstelle bzw. eine zusätzliche Bohrung in den Verbindungsflächen bzw. Verbindungsabschnitten angebracht sein, wodurch die jeweils zwei gegenüberliegenden Verbindungsflächen bzw. Verbindungsabschnitte zusätzlich verbunden werden.

Gemäß einem weiteren nicht zur Erfindung gehörenden Ausführungsbeispiel kann sich das Trägerprofil aus zwei Winkelprofilen zusammensetzen, welche jeweils um 180° gedreht zueinander angeordnet sind. Am Trägerprofil können jeweils mittels Montageelemente in Form von Schrauben zwei gegenüberliegende Federelemente derartig angeordnet sein, dass deren Umfangsflächen eine kreisförmige Lauffläche bzw. einen Packerring bilden. Die Federelemente können jeweils eine äußere im Wesentlichen kreisförmige Umfangsfläche, zwei innere der Kontur des Trägerprofils zumindest abschnittsweise entsprechende Montageflächen sowie zwei sich zwischen der äußeren Umfangsfläche und der inneren Montagefläche jeweils erstreckende Verbindungsflächen bzw. Verbindungsabschnitte aufweisen, wobei jeweils eine Montagefläche und eine Verbindungsfläche bzw. ein Verbindungsabschnitt durch einen gemeinsamen Abschnitt des Federelements gebildet werden. Um die bei der Bodenbearbeitung auf die Federelemente einwirkenden Kräfte aufnehmen zu können bzw. ein ausreichende Stabilität der Federelemente zu erreichen, sowie ein Auseinanderklaffen der wenigstens zwei gegenüberliegende Federelemente zu verhindern, kann wenigstens eine zusätzliche Verbindungsstelle bzw. eine zusätzliche Bohrung in den Verbindungsflächen bzw. Verbindungsabschnitten angebracht sein, wodurch die jeweils zwei gegenüberliegenden Verbindungsflächen bzw. Verbindungsabschnitte zusätzlich verbunden werden. Zusätzlich können die Federelemente mittels der Verbindungsstelle nochmals mit dem Trägerprofil verbunden werden, wodurch die Festigkeit der Packerwalze bzw. der Federelemente noch weiter erhöht werden kann.

Gemäß einem weiteren nicht zur Erfindung gehörenden Ausführungsbeispiel kann sich das Trägerprofil aus zwei bzw. drei Flachmaterialien zusammensetzen, welche jeweils um 90° gedreht zueinander angeordnet sind. Am Trägerprofil können jeweils mittels Montageelemente in Form von Schrauben zwei gegenüberliegende Federelemente derartig angeordnet sein, dass deren Umfangsflächen eine kreisförmige Lauffläche bzw. einen Packerring bilden. Die Federelemente können hierbei jeweils eine äußere im Wesentlichen kreisförmige Umfangsfläche, zwei innere der Kontur des Trägerprofils zumindest abschnittsweise entsprechende Montageflächen sowie zwei sich zwischen der äußeren Umfangsfläche und der inneren Montagefläche jeweils erstreckende Verbindungsflächen bzw. Verbindungsabschnitte aufweisen, wobei jeweils eine Montagefläche und eine Verbindungsfläche bzw. ein Verbindungsabschnitt durch einen gemeinsamen Abschnitt des Federelements gebildet werden. Um die bei der Bodenbearbeitung auf die Federelemente einwirkenden Kräfte aufnehmen zu können bzw. ein ausreichende Stabilität der Federelemente zu erreichen, sowie ein Auseinanderklaffen der wenigstens zwei gegenüberliegende Federelemente zu verhindern, kann wenigstens eine zusätzliche Verbindungsstelle bzw. eine zusätzliche Bohrung in den Verbindungsflächen bzw. Verbindungsabschnitten angebracht sein, wodurch die jeweils zwei gegenüberliegenden Verbindungsflächen bzw. Verbindungsabschnitte zusätzlich verbunden werden. Zusätzlich können die Federelemente mittels der Verbindungsstelle nochmals mit dem Trägerprofil verbunden sein, wodurch die Festigkeit der Packerwalze bzw. der Federelemente noch weiter erhöht werden kann.

Des Weiteren können die Federelemente vorzugsweise jeweils so ausgeführt, dass diese an beliebiger Stelle angebaut werden, so dass bspw. eine Lauffläche bzw. ein Packerring durch zwei gegenüberliegende und zueinander verdrehte identische Federelemente gebildet wird. In diesem Fall werden zur Schaffung einer Packerwalze lediglich zwei verschieden Bauteile (Federelement und Trägerprofil) benötigt, welche wiederum mittels diverser Montageelemente bzw. Verbindungselemente, insbesondere durch Schrauben verbunden werden, wodurch die Teilevielfalt der Packerwalze auf ein Minimum reduziert wird und somit die Herstellkosten auf ein Minimum reduziert werden können. Auch kann eine Ersatzteilversorgung somit wesentlich vereinfacht werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen hierbei nicht immer den realen Größenverhältnissen, da einige Formen vereinfacht und andere Formen zur besseren Veranschaulichung vergrößert im Verhältnis zu anderen Elementen dargestellt sind. Hierbei zeigen
- Figur 1A: eine Perspektivansicht einer Ausführungsvariante einer erfindungsgemäßen Packerwalze.
- Figur 1B: eine Vorderansicht einer Ausführungsvariante einer erfindungsgemäßen Packerwalze gemäß der Figur 1A.
- Figur 1C: eine Seitenansicht einer Ausführungsvariante einer erfindungsgemäßen Packerwalze gemäß der Figur 1A.
- Figur 2A: eine Perspektivansicht zweier gegenüberliegender und verbundener Federelemente.
- Figur 2B: eine Seitenansicht zweier gegenüberliegender und verbundener Federelemente gemäß der Figur 2A.
- Figuren 3A: weitere Seitenansichten von Ausführungsvarianten der
- und 3B: erfindungsgemäßen Packerwalze mit verschiedenen Trägerprofilen und Federelementen.
- Figuren 3C -: eine Mehrzahl von Seitenansichten von Ausführungsvarianten
- 3F: einer weiteren Packerwalze mit verschiedenen Trägerprofilen und Federelementen, die nicht zur Erfindung gehören.

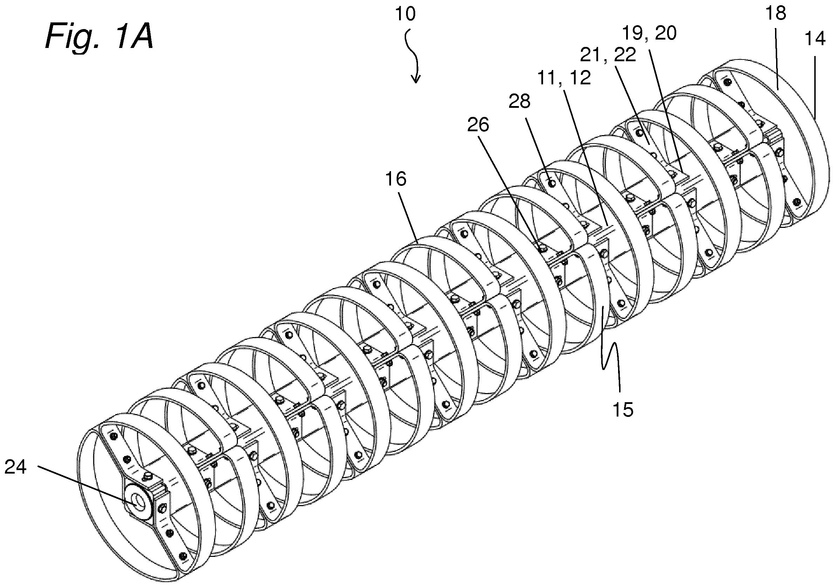

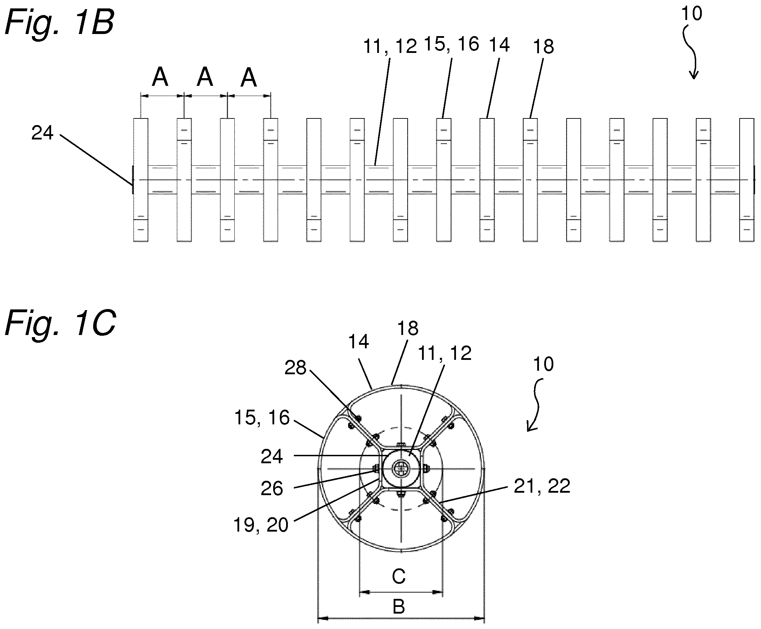

Für gleiche oder gleich wirkende Elemente der Erfindung werden in den Figuren 1 bis 3F jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen gemäß den Figuren 1 bis 3B stellen lediglich Beispiele dar, wie die erfindungsgemäße Packerwalze zur Bodenbearbeitung ausgestaltet sein kann und stellen keine abschließende Begrenzung dar.

Eine Ausführungsvariante einer erfindungsgemäßen Packerwalze 10 zur Bodenbearbeitung geht aus den Figuren 1A bis 1C hervor, wobei die Figur 1A die um eine in etwa horizontale Drehachse rotierbare Packerwalze 10 in einer Perspektivansicht zeigt, die Figur 1B die Packerwalze 10 in einer Seitenansicht zeigt sowie die Figur 1C die Packerwalze 10 in einer Seitenansicht zeigt. Derartige Packerwalzen 10 finden u. a. in landwirtschaftlichen Maschinen wie bspw. Bodenbearbeitungsgeräten und Saatgeräten Verwendung, und dienen insbesondere zur Rückverfestigung eines vorher gelockerten Ackerbodens sowie zur Erzeugung einer fein krümeligen Bodenstruktur, aber auch zur Tiefenführung der landwirtschaftlichen Maschine. Die Packerwalze 10 weist zunächst eine rotierbare Trägerwelle 11 bzw. ein Trägerprofil 12 auf, welches im Ausführungsbeispiel der Figuren 1 als quadratisches Hohlprofil ausgeführt ist, wobei hier auch andere Querschnitte und Trägerprofilkonturen denkbar wären.

Am Trägerprofil 12 der Trägerwelle 11 sind in regelmäßigen Abständen A zueinander jeweils zumindest zwei gegenüberliegende Federelemente 14 angebracht (siehe hierzu die Figur 1B), wobei die wenigstens zwei gegenüberliegenden Federelemente 14 hierbei eine zumindest weitgehend kreisförmige bzw. eine kreisförmige Lauffläche 16 bzw. einen Packerring 16 bilden. Wie es die Figuren 1A bis 1C deutlich erkennen lassen, weist die Trägerwelle 11 oder das Trägerprofil 12 insgesamt eine Mehrzahl von in Längserstreckungsrichtung der Trägerwelle 11 bzw. des Trägerprofils 12 der Packerwalze 10 jeweils (um die Abstände A) beabstandet voneinander angeordnete Federelemente 14 mit jeweils ringsegmentförmigem Felgenabschnitt 15 auf, wobei jeweils zumindest zwei in ungefähr gleicher axialer Position an der Trägerwelle 11 bzw. am Trägerprofil 12 gegenüberliegend angeordnete Federelemente 14 mit ihren aneinander anschließenden ringsegmentförmigen Felgenabschnitten 15 gemeinsam eine kreisförmige oder annähernd kreisförmige Lauffläche 16 bilden.

Außerdem weisen die Federelemente 14 jeweils einen Nabenbereich 19, zwei Speichenabschnitte 21 und den ringsegmentförmigen Felgenabschnitt 15 auf, wobei die ringsegmentförmigen Felgenabschnitte 15 eine äußere, im Wesentlichen kreisförmige oder kreissegmentförmige Umfangsfläche 18 bilden. Hierbei ist der Nabenbereich 19 durch zwei innere, mit der Kontur der Trägerwelle 11 bzw. des Trägerprofils 12 zumindest abschnittsweise korrespondierende Montageflächen 20 gebildet. Zudem ist erkennbar, dass die Speichenabschnitte 21 durch zwei sich zwischen der äußeren Umfangsfläche 18 bzw. dem Felgenabschnitt 15 und der inneren Montagefläche 20 bzw. dem Nabenbereich 19 erstreckende Verbindungsflächen bzw. Verbindungsabschnitte 22 gebildet sind.

Bei der gezeigten Packerwalze 10 zur Bodenbearbeitung weisen die Montageflächen 20 im Nabenbereich 19 jeweils wenigstens eine Bohrung oder einen Ausschnitt auf, mittels derer die jeweils wenigstens zwei Federelemente 14 an der Trägerwelle 11 bzw. am Trägerprofil 12 anbringbar sind; weiterhin ist erkennbar, dass zumindest ein Montageelement 26 mit der Trägerwelle 11 bzw. dem Trägerprofil 12 und zumindest einem Federelement 14 verbunden ist. Die Verbindungsflächen bzw. Speichenabschnitte 21 bzw. Verbindungsabschnitte 22 weisen jeweils wenigstens eine zusätzliche Verbindungsstelle 28 auf, mittels derer jeweils zwei gegenüberliegende Federelemente 14 aneinander fixiert und/oder miteinander verschraubt sind.

Insbesondere die Seitenansicht der Figur 1C lässt deutlich erkennen, dass die Federelemente 14 jeweils eine äußere im Wesentlichen kreisförmige Umfangsfläche 18 aufweisen, die durch die sich in Umfangsrichtung aneinander anschließenden ringsegmentförmigen Felgenabschnitte 15 gebildet ist. Außerdem weisen die Federelemente 14 zwei innere, der Kontur des Trägerprofils 12 zumindest abschnittsweise entsprechende Montageflächen 20 sowie zwei sich zwischen der äußeren Umfangsfläche 18 und der inneren Montagefläche 20 jeweils erstreckende Verbindungsflächen bzw. Verbindungsabschnitte 22 auf, wie sie bereits oben im Detail erläutert wurden.

Stirnseitig ist dem Trägerprofil 12 jeweils ein Lagerflansch 24 zugeordnet, mittels welchem die Packerwalze 10 bspw. an einer hier nicht dargestellten Rahmenkonstruktion einer landwirtschaftlichen Maschine drehbar montierbar ist. Der Lagerflansch 24 kann hierbei sowohl mit dem Trägerprofil 12 oder der Trägerwelle 11 verschweißt als auch verschraubt sein aber auch auf andere Weise mit diesem verbunden sein. Der Lagerflansch 24 besitzt zudem einen runden Innenquerschnitt, um bspw. die Montage einer Lagerung zu vereinfachen.

Zur Montage bzw. zur Verbindung der jeweils zwei gegenüberliegenden Federelemente 14 mit dem Trägerprofil 12 oder der Trägerwelle 11 sind den Montageflächen 20 im Nabenbereich 19 jeweils Bohrungen oder Ausschnitte oder dergl. Öffnungen zugeordnet, mittels derer diese jeweils am Trägerprofil 12 anbringbar bzw. anschraubbar sind, wobei hierzu zumindest ein Montageelement 26 in Form einer Schraube 26 mit dem Trägerprofil 12 und zumindest einem Federelement 14 verbunden ist. Neben der Verwendung von Schrauben 26 als Montageelement 26 wären auch andere Montageelemente 26, wie bspw. Nieten, Bolzen oder dergl. denkbar, wobei jedoch Schrauben 26 bzw. lösbare Montageelemente 26 bevorzugt Verwendung finden, um somit eine einfache und schnelle Montage bzw. Wechselbarkeit von defekten Federelemente 14 zu ermöglichen, sowie um den generellen Montageaufwand möglichst gering zu halten.

Um die bei der Bodenbearbeitung auf die Federelementen 14 einwirkenden Kräfte aufnehmen zu können bzw. eine ausreichende Stabilität der Federelemente 14 zu erreichen und um darüber hinaus ein Auseinanderklaffen der wenigstens zwei gegenüberliegenden und gemeinsam einen Packerring 16 bildenden Federelemente 14 zu verhindern, ist wenigstens eine zusätzliche Verbindung bzw. eine zusätzliche Verbindungsstelle 28 bspw. in Form einer Bohrung 28 oder einer Öffnung oder dergl. Ausschnitt in den Verbindungsflächen bzw. Verbindungsabschnitten 22 - gebildet durch die oben erläuterten Speichenabschnitte 21 - angebracht, wodurch die jeweils zwei gegenüberliegenden Verbindungsflächen bzw. Verbindungsabschnitte 22 oder Speichenabschnitte 21 zusätzlich verbunden werden. Um dies noch weiter zu verbessern, ist vorgesehen, dass die wenigstens eine zusätzliche Verbindungsstelle 28 bzw. die zusätzliche Bohrung 28 in einem Bereich angeordnet ist, der innerhalb des Außendurchmessers B der Umfangsfläche 18 liegt und der außerhalb oder gleich einem halben Außendurchmesser C der Umfangsfläche 18 ist.

Auch wäre es denkbar, dass die zusätzliche Verbindung in einem Bereich angeordnet ist, der innerhalb oder gleich einem halben Außendurchmesser C der Umfangsfläche 18 ist. Auch denkbar wäre es, zwei oder mehr zusätzliche Verbindungsstellen 28 in den wenigstens zwei gegenüberliegenden Federelementen 14 zu haben, wobei die Positionen jeweils derartig gewählt sind, dass ein Auseinanderklaffen der gegenüberliegenden Federelemente 14 unterbunden werden kann. Neben der Verwendung von Schrauben als Verbindungselemente wären zur Verbindung der Verbindungsflächen an den Speichenabschnitten 21 der jeweiligen Federelemente 14 bzw. an deren Verbindungsabschnitte 22 auch andere Verbindungselemente, wie bspw. Nieten, Bolzen oder dergl. denkbar, wobei jedoch Schrauben bzw. lösbare Montageelemente bevorzugt Verwendung finden, um somit eine einfache und schnelle Montage bzw. Wechselbarkeit von defekten Federelementen 14 zu ermöglichen.

Die sich aus jeweils zumindest zwei gegenüberliegenden Federelementen 14 bildenden kreisförmigen Laufflächen bzw. Packerringe 16 sind jeweils um 90° radial zueinander verdreht angeordnet. Damit sind die jeweils halbkreisförmigen Felgenabschnitte 15 gemeint, die bei aneinander gefügten Federelementen 14 gemeinsam einen Packerring 16 bilden. Dieser 90°-Versatz jeweils benachbarter Packerringe 16 bietet den Vorteil, dass trotz der sich durch die wenigstens zwei gegenüberliegenden Federelemente 14 unterbrochene kreisförmige Lauffläche 16 eine laufruhige Packerwalze 10 geschaffen ist, da die unterbrochene Lauffläche 16 jeweils durch die radial verdreht zu dieser angeordneten Lauffläche 16 überbrückt wird. Auch kann somit die Stabilität der Packerwalze 10 bzw. der Federelemente 14 wesentlich erhöht werden, da eine Umfangsfläche 18 jeweils durch jeweils eine bzw. zwei benachbarte zu dieser angeordnete und verbundene Verbindungsflächen bzw. Verbindungsabschnitte 22 (Speichenabschnitte 21) abgestützt wird. Der jeweilige Winkel, um welchen die Federelemente 14 zueinander verdreht sind, kann somit bspw. abhängig von der Anzahl an jeweils gegenüberliegenden und eine Lauffläche 16 bildenden Federelementen 14 sein. Darüber hinaus kann eine radiale Verdrehung auch wiederum vom Trägerprofil 12 abhängen, ist dieses bspw. wie im Ausführungsbeispiel der Figuren 1 als quadratisches Hohlprofil ausgeführt, ist eine Verdrehung von 90° optimal, bzw. am einfachsten auszuführen, da somit keine separaten bzw. anders ausgeführte Federelemente 14 benötigt werden.

Die Umfangsfläche 18 bzw. das Federelement 14 gemäß der Figuren 1A bis 1C weist nach außen hin eine flache Kontur auf, wobei auch andere Konturen, wie bspw. V-förmige, U-förmige, T-förmige oder dergl., denkbar bzw. vorstellbar wären. Auch denkbar wäre es, nur einzelne Flächen mit einer aufgeprägten Kontur zu versehen. So wäre es denkbar, dass bspw. die Umfangsfläche 18 sowie die Montageflächen 20 eine flache Kontur aufweisen sowie die Verbindungsflächen bzw. Verbindungsabschnitte 22 bspw. eine quadratische oder dreieckige oder dergl. Kontur aufweisen. Auch kreisförmig ausgeprägte Konturen wären denkbar. Derartige Konturen im Bereich der Verbindungsfläche bzw. des Verbindungsabschnitts 22 hätten den Vorteil, dass durch die Verbindung der wenigstens zwei gegenüberliegenden Federelemente 14 im Bereich der Verbindungsflächen bzw. des Verbindungsabschnitts 22 bspw. eine quadratische Kontur oder dergl. entsteht, wodurch die Stabilität bzw. die Festigkeit der Packerwalze 10 und deren Federelemente 14 noch weiter verbessert werden kann.

Des Weiteren sind die Federelemente 14 jeweils so ausgeführt, dass diese an beliebiger Stelle angebaut werden können. So dass bspw. ein Packerring 16 durch zwei gegenüberliegende und zueinander verdrehte, identische Federelemente 14 gebildet wird. In diesem Fall werden zur Schaffung einer Packerwalze 10 lediglich zwei verschiedene Bauteile (Federelement 14 und Trägerprofil 12) benötigt, welche wiederum mittels Verbindungselemente oder Montageelemente, insbesondere in Form von Schrauben, verbunden werden.

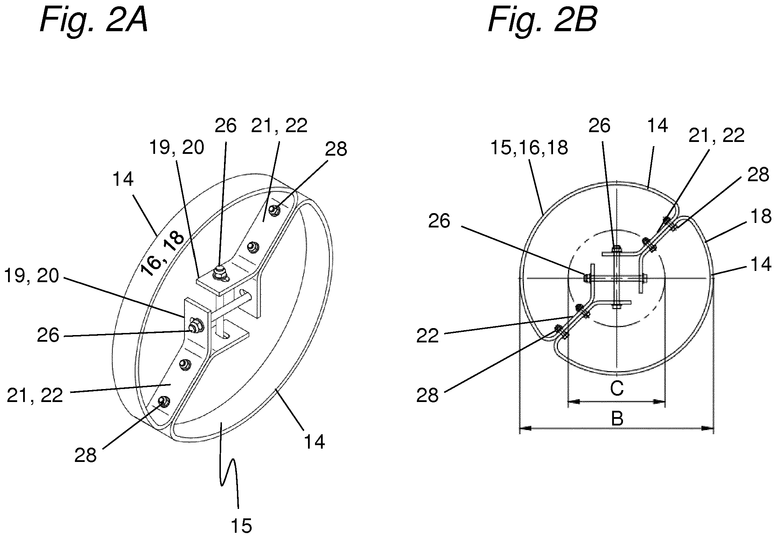

Weitere Details von wenigstens zwei gegenüberliegenden Federelementen 14 gehen aus den Figuren 2A und 2B hervor. Zwei gegenüberliegende und an einem hier nicht dargestellten Trägerprofil montierbare Federelemente 14 bilden jeweils einen Packerring bzw. eine kreisförmige Lauffläche 16. Die Federelemente 14 weisen jeweils eine äußere im Wesentlichen kreisförmige Umfangsfläche 18, zwei innere der Kontur des Trägerprofils 12 zumindest abschnittsweise entsprechende Montageflächen 20 sowie, zwei sich zwischen der äußeren Umfangsfläche 18 und der inneren Montagefläche 20 jeweils erstreckende Verbindungsflächen bzw. Verbindungsabschnitte 22 auf.

Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegende Federelemente 14 zu verhindern, ist wenigstens eine zusätzliche Verbindungsstelle 28 in den Verbindungsflächen bzw. Verbindungsabschnitten 22 angebracht, wodurch die jeweils zwei gegenüberliegenden Verbindungsflächen bzw. Verbindungsabschnitte 22 zusätzlich verbunden werden. Um dies noch weiter zu verbessern, ist vorgesehen, dass die wenigstens eine zusätzliche Verbindungsstelle 28 in einem Bereich angeordnet ist, der innerhalb des Außendurchmessers B der Umfangsfläche 18 liegt und der außerhalb oder gleich einem halben Außendurchmesser C der Umfangsfläche 18 ist. Auch wäre es denkbar, dass die wenigstens eine zusätzliche Verbindungsstelle 28 in einem Bereich angeordnet ist, der innerhalb oder gleich einem halben Außendurchmesser C der Umfangsfläche 18 ist. Auch denkbar wäre es, zwei oder mehr zusätzliche Verbindungsstellen 28, insbesondere in Form von zusätzlichen Bohrungen 28, in den wenigstens zwei gegenüberliegenden Federelementen 14 zu haben, wobei die Positionen jeweils derartig gewählt sind, dass ein Auseinanderklaffen der gegenüberliegenden Federelemente 14 unterbunden wird und eine verbesserte bzw. erhöhte Stabilität der Federelemente 14 erreicht wird.

Jeweils zwei gegenüberliegende Federelemente 14 werden im Ausführungsbeispiel der Figur 2 mittels wenigstens zwei durch das nicht abgebildete Trägerprofil hindurchragende bzw. durchgesteckte Montageelemente 26 in Form von Schrauben 26 mit dem Trägerprofil verbunden, wobei dies auch mittels einer oder mehr Schrauben 26 erfolgen kann und wobei auch andere Montagelemente verwendet werden können. Da die Schrauben 26 bzw. die Montageelemente 26 jeweils durch ein Zentrum des Trägerprofils hindurchgesteckt bzw. hindurchgeführt werden, sind die Schrauben 26 axial zueinander versetzt. Es wäre jedoch auch denkbar, die Schrauben 26 außerhalb des Zentrums des Trägerprofils 12 anzuordnen, wobei in diesem Fall auf einen axialen Versatz verzichtet werden kann.

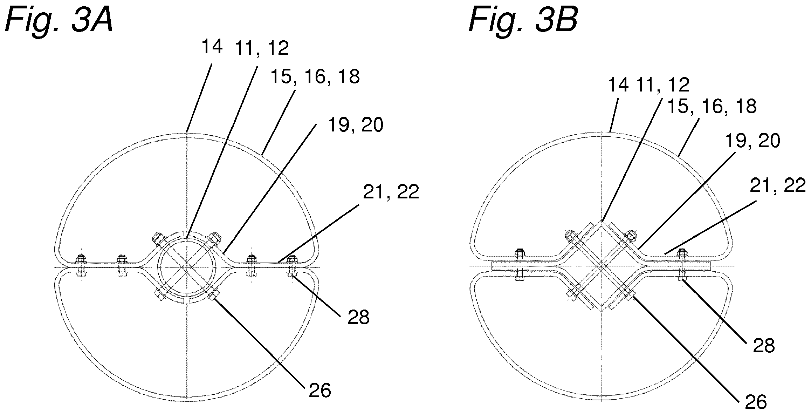

Weitere Ausgestaltungsvarianten von Trägerprofilen 12 sowie von an diesen angebrachten Federelementen 14 zur Schaffung einer Packerwalze 10 gehen aus den Figuren 3A bis 3F hervor.

Die schematische Seitenansicht auf einen Packerring 16 der Figur 3A zeigt ein Trägerprofil 12, welches aus einem Rohrprofil gefertigt wurde. An diesem Rohr sind jeweils mittels Montageelemente 26 in Form von Schrauben zwei gegenüberliegende Federelemente 14 derartig angeordnet, dass deren ringsegmentförmigen Felgenabschnitte 15 bzw. deren Umfangsflächen 18 insgesamt eine kreisförmige Lauffläche 16 bzw. einen Packerring 16 bilden. Die Federelemente 14 weisen jeweils eine äußere im Wesentlichen kreisförmige Umfangsfläche 18, zwei innere der Kontur des Trägerprofils 12 zumindest abschnittsweise entsprechende Montageflächen 20 in ihrem Nabenbereich 19 sowie zwei sich zwischen der äußeren Umfangsfläche 18 und der inneren Montagefläche 20 jeweils erstreckende Verbindungsflächen bzw. Verbindungsabschnitte 22 auf, gebildet durch die hier so bezeichneten Speichenabschnitte 21. Die Montagefläche 20 im Nabenbereich 19 der Federelemente 14 ist im Ausführungsbeispiel der Figur 3A kreisförmig ausgebildet, um somit eine einfache Montage der Federelemente 14 am Trägerprofil 12 bzw. an der ungefähr zylindrischen Trägerwelle 11 zu gewährleisten. Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegend aneinander gefügten und an ihren Speichenabschnitten 21 miteinander verbundenen Federelemente 14 zu verhindern, ist wenigstens eine zusätzliche Verbindungsstelle 28 bzw. eine zusätzliche Bohrung 28 in den Verbindungsflächen bzw. Verbindungsabschnitten 22 (bzw. an den jeweiligen Speichenabschnitten 21) angebracht, wodurch die jeweils zwei gegenüberliegenden Verbindungsflächen bzw. Verbindungsabschnitte 22 bzw. Speichenabschnitte 21 zusätzlich verbunden werden und somit die Stabilität wesentlich erhöht wird.

Die schematische Seitenansicht auf einen Packerring 16 der Figur 3B zeigt ein alternativ geformtes Trägerprofil 12 bzw. eine alternativ geformte Trägerwelle 11, welches sich aus zwei Profilhälften bspw. in Form von Blechhälften zusammensetzt, wobei das Trägerprofil 12 in einem mittleren Bereich einen quadratischen Querschnitt aufweist, welcher in radialer Richtung nach außen in einen flachen Querschnitt übergeht. Am Trägerprofil 12 sind jeweils mittels Montageelemente 26 in Form von Schrauben zwei gegenüberliegende Federelemente 14 mit ihrem Nabenbereich 19 derartig angeordnet, dass deren Umfangsflächen 18 eine kreisförmige Lauffläche 16 bzw. einen Packerring 16 bilden. Mittels dieser Montageelemente 26 können auch die zwei Profilhälften verbunden werden, wobei diese auch verschweißt oder mittels anderer Montagemittel verbunden sein können.

Die Federelemente 12 weisen jeweils eine äußere im Wesentlichen kreisförmige Umfangsfläche 18, zwei innere der Kontur des Trägerprofils 12 zumindest abschnittsweise entsprechende Montageflächen 20 sowie zwei sich zwischen der äußeren Umfangsfläche 18 und der inneren Montagefläche 20 jeweils erstreckende Verbindungsflächen bzw. Verbindungsabschnitte 22 auf. Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegende Federelemente 14 zu verhindern, ist wenigstens eine zusätzliche Verbindungsstelle 28 bzw. eine zusätzliche Bohrung 28 in den Verbindungsflächen bzw. Verbindungsabschnitten 22bzw. an den Speichenabschnitten 21 angebracht, wodurch die jeweils zwei gegenüberliegenden Verbindungsflächen bzw. Verbindungsabschnitte 22 bzw. Speichenabschnitte 21 zusätzlich verbunden werden. Zusätzlich werden die Federelemente 14 mittels der Verbindungsstelle 28 nochmals fester mit dem Trägerprofil 12 verbunden, wodurch die Festigkeit der Packerwalze 10 bzw. der Federelemente 14 noch weiter erhöht werden kann.

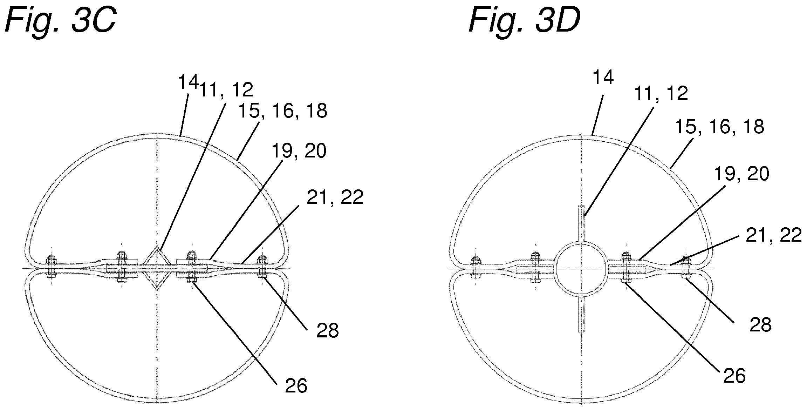

Die schematische Seitenansicht der Figur 3C zeigt ein weiteres Trägerprofil 12, welches sich aus einem Flachmaterial sowie einem bzw. zwei Winkelmaterialien zusammensetzt, wobei das Trägerprofil 12 in einem mittleren Bereich einen quadratischen Querschnitt aufweist, welcher in radialer Richtung nach außen in einen flachen Querschnitt übergeht. Am Trägerprofil 12 sind jeweils mittels Montageelemente 26 in Form von Schrauben zwei gegenüberliegende Federelemente 14 derartig angeordnet, dass deren Umfangsflächen 18 eine kreisförmige Lauffläche 16 bzw. einen Packerring bilden. Die Federelemente 12 weisen jeweils eine äußere im Wesentlichen kreisförmige Umfangsfläche 18, zwei innere der Kontur des Trägerprofils 12 zumindest abschnittsweise entsprechende Montageflächen 20 sowie zwei sich zwischen der äußeren Umfangsfläche 18 und der inneren Montagefläche 20 jeweils erstreckende Verbindungsflächen bzw. Verbindungsabschnitte 22 auf. Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegende Federelemente 14 zu verhindern, ist wenigstens eine zusätzliche Verbindungsstelle 28 bzw. eine zusätzliche Bohrung 28 in den Verbindungsflächen bzw. Verbindungsabschnitten 22 angebracht, wodurch die jeweils zwei gegenüberliegenden Verbindungsflächen bzw. Verbindungsabschnitte 22 zusätzlich verbunden werden.

Die Figur 3D zeigt ein Trägerprofil 12, welches sich aus einem Rohrprofil sowie jeweils um 90° zueinander versetzt angebrachte Flachmaterialen zusammensetzt, wobei das Trägerprofil 12 in einem mittleren Bereich einen runden Querschnitt aufweist, welcher in radialer Richtung nach außen in einen flachen Querschnitt übergeht. Am Trägerprofil 12 sind jeweils mittels Montageelemente 26 in Form von Schrauben zwei gegenüberliegende Federelemente 14 derartig angeordnet, dass deren Umfangsflächen 18 eine kreisförmige Lauffläche 16 bzw. einen Packerring 16 bilden. Die Federelemente 14 weisen jeweils eine äußere im Wesentlichen kreisförmige Umfangsfläche 18, zwei innere der Kontur des Trägerprofils 12 zumindest abschnittsweise entsprechende Montageflächen 20 sowie zwei sich zwischen der äußeren Umfangsfläche 18 und der inneren Montagefläche 20 jeweils erstreckende Verbindungsflächen bzw. Verbindungsabschnitte 22 auf. Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegende Federelemente 14 zu verhindern, ist wenigstens eine zusätzliche Verbindungsstelle 28 bzw. eine zusätzliche Bohrung 28 in den Verbindungsflächen bzw. Verbindungsabschnitten 22 angebracht, wodurch die jeweils zwei gegenüberliegenden Verbindungsflächen bzw. Verbindungsabschnitte 22 zusätzlich verbunden werden.

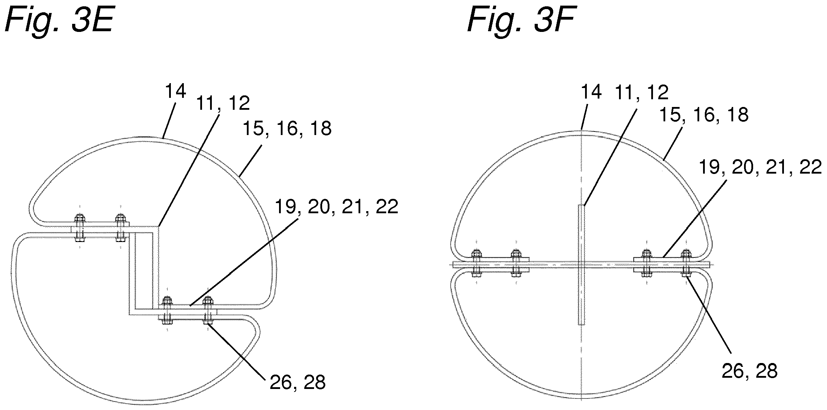

Die Figur 3E zeigt ein Trägerprofil 12, welches sich aus zwei Winkelprofilen, welche jeweils um 180° gedreht zueinander sind, zusammensetzt. Am Trägerprofil 12 sind jeweils mittels Montageelemente 26 in Form von Schrauben zwei gegenüberliegende Federelemente 14 derartig angeordnet, dass deren Umfangsflächen 18 eine kreisförmige Lauffläche 16 bzw. einen Packerring 16 bilden. Die Federelemente 12 weisen jeweils eine äußere im Wesentlichen kreisförmige Umfangsfläche 18, zwei innere der Kontur des Trägerprofils 12 zumindest abschnittsweise entsprechende Montageflächen 20 sowie zwei sich zwischen der äußeren Umfangsfläche 18 und der inneren Montagefläche 20 jeweils erstreckende Verbindungsflächen bzw. Verbindungsabschnitte 22 auf, wobei jeweils eine Montagefläche 20 und eine Verbindungsfläche bzw. ein Verbindungsabschnitt 22 durch einen gemeinsamen Abschnitt des Federelements 14 gebildet werden. Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegende Federelemente 14 zu verhindern, ist wenigstens eine zusätzliche Verbindungsstelle 28 bzw. eine zusätzliche Bohrung 28 in den Verbindungsflächen bzw. Verbindungsabschnitten 22 angebracht, wodurch die jeweils zwei gegenüberliegenden Verbindungsflächen bzw. Verbindungsabschnitte 22 zusätzlich verbunden werden. Zusätzlich werden die Federelemente 14 mittels der Verbindungsstelle 28 nochmals mit dem Trägerprofil 12 verbunden, wodurch die Festigkeit der Packerwalze 10 bzw. der Federelemente 14 noch weiter erhöht werden kann.

Die Figur 3F zeigt ein Trägerprofil 12, welches sich aus zwei bzw. drei Flachmaterialen, welche jeweils um 90°gedreht zueinander angeordnet sind zusammensetzt. Am Trägerprofil 12 sind jeweils mittels Montageelemente 26 in Form von Schrauben zwei gegenüberliegende Federelemente 14 derartig angeordnet, dass deren Umfangsflächen 18 eine kreisförmige Lauffläche 16 bzw. einen Packerring 16 bilden. Die Federelemente 14 weisen hierbei jeweils eine äußere im Wesentlichen kreisförmige Umfangsfläche 18, zwei innere der Kontur des Trägerprofils 12 zumindest abschnittsweise entsprechende Montageflächen 20 sowie zwei sich zwischen der äußeren Umfangsfläche 18 und der inneren Montagefläche 20 jeweils erstreckende Verbindungsflächen bzw. Verbindungsabschnitte 22 auf, wobei jeweils eine Montagefläche 20 und eine Verbindungsfläche bzw. ein Verbindungsabschnitt 22 durch einen gemeinsamen Abschnitt des Federelements 14 gebildet werden. Um die bei der Bodenbearbeitung auf die Federelemente 14 einwirkenden Kräfte aufnehmen zu können bzw. ein ausreichende Stabilität der Federelemente 14 zu erreichen, sowie ein Auseinanderklaffen der wenigstens zwei gegenüberliegende Federelemente 14 zu verhindern, ist wenigstens eine zusätzliche Verbindungsstelle 28 bzw. eine zusätzliche Bohrung 28 in den Verbindungsflächen bzw. Verbindungsabschnitten 22 angebracht, wodurch die jeweils zwei gegenüberliegenden Verbindungsflächen bzw. Verbindungsabschnitte 22 zusätzlich verbunden werden. Zusätzlich werden die Federelemente 14 mittels der Verbindungsstelle 28 nochmals mit dem Trägerprofil 12 verbunden, wodurch die Festigkeit der Packerwalze 10 bzw. der Federelemente 14 noch weiter erhöht werden kann.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Packerwalze
- 11: Trägerwelle
- 12: Trägerprofil
- 14: Federelement
- 15: ringsegmentförmiger Felgenabschnitt
- 16: Lauffläche, Packerring
- 18: Umfangsfläche
- 19: Nabenbereich
- 20: Montagefläche
- 21: Speichenabschnitt
- 22: Verbindungsfläche, Verbindungsabschnitt
- 24: Lagerflansch
- 26: Schraube, Montageelement
- 28: Bohrung, Verbindungsstelle, Verbindungselement,

- A: Axialer Abstand von zwei Federelementen
- B: Außendurchmesser der Lauffläche
- C: B/2

## Patentansprüche

1. Packerwalze (10) zur Bodenbearbeitung umfassend zumindest ein Trägerprofil (12), welches durch eine rotierbare Trägerwelle (11) gebildet ist und an welchem jeweils beabstandet zueinander eine Mehrzahl von Federelementen (14) angeordnet sind, wobei jeweils zumindest zwei gegenüberliegende Federelemente (14) eine weitgehend kreisförmige oder eine kreisförmige Lauffläche (16) bilden, wobei die Federelemente (14) zumindest eine äußere im Wesentlichen kreisförmige Umfangsfläche (18), zwei innere der Kontur des Trägerprofils (12) zumindest abschnittsweise entsprechende Montageflächen (20) sowie zwei sich zwischen der äußeren Umfangsfläche (18) und der inneren Montagefläche (20) erstreckende Verbindungsflächen oder Verbindungsabschnitte (22) aufweisen, wobei zwischen den Montageflächen (20) und den Verbindungsflächen oder den Verbindungsabschnitten (22) und der Umfangsfläche jeweils insbesondere bogenförmige Verbindungsabschnitte angeordnet sind, um ein zusammenhängendes Federelement (14) zu schaffen, wobei jeweils wenigstens zwei derartig gegenüberliegende Federelemente (14) einen Packerring bilden, wobei die Montageflächen (20) zumindest abschnittsweise mit dem Außenumfang des Trägerprofils (12) in Oberflächenkontakt stehen und/oder bündig auf dem Außenumfang des Trägerprofils (12) aufliegen, wobei die Montageflächen (20) jeweils wenigstens eine Bohrung oder einen Ausschnitt aufweisen, mittels derer die jeweils wenigstens zwei Federelemente (14) am Trägerprofil (12) anbringbar sind, wobei hierzu zumindest ein Montageelement (26) mit dem Trägerprofil (12) und zumindest einem Federelement (14) verbunden ist, **dadurch gekennzeichnet, dass** die Verbindungsflächen oder Verbindungsabschnitte (22) jeweils wenigstens eine zusätzliche Verbindungsstelle (28) aufweisen, mittels derer jeweils zwei gegenüberliegende Federelemente (14) verschraubt und/oder verbunden werden.

2. Packerwalze zur Bodenbearbeitung nach Anspruch 1, **dadurch gekennzeichnet, dass** die Trägerwelle (11) oder das Trägerprofil (12) eine Mehrzahl von in Längserstreckungsrichtung der Trägerwelle (11) oder des Trägerprofils (12) jeweils beabstandet voneinander angeordnete Federelemente (14) mit jeweils ringsegmentförmigem Felgenabschnitt (15) trägt, wobei jeweils zumindest zwei in ungefähr gleicher axialer Position an der Trägerwelle (11) oder am Trägerprofil (12) gegenüberliegend angeordnete Federelemente (14) mit ihren aneinander anschließenden ringsegmentförmigen Felgenabschnitten (15) gemeinsam eine kreisförmige oder annähernd kreisförmige Lauffläche (16) bilden.

3. Packerwalze zur Bodenbearbeitung nach Anspruch 1 oder 2, **dadurch gekennzeichnet, dass** die Federelemente (14) jeweils einen Nabenbereich (19), zwei Speichenabschnitte (21) und den ringsegmentförmigen Felgenabschnitt (15) aufweisen, wobei die ringsegmentförmigen Felgenabschnitte (15) eine äußere, im Wesentlichen kreisförmige oder kreissegmentförmige Umfangsfläche (18) bilden.

4. Packerwalze zur Bodenbearbeitung nach Anspruch 3, **dadurch gekennzeichnet, dass** der Nabenbereich (19) durch zwei innere, mit der Kontur der Trägerwelle (11) oder des Trägerprofils (12) zumindest abschnittsweise korrespondierende Montageflächen (20) gebildet ist, und dass die Speichenabschnitte (21) durch zwei sich zwischen der äußeren Umfangsfläche (18) oder dem Felgenabschnitt (15) und der inneren Montagefläche (20) oder dem Nabenbereich (19) erstreckende Verbindungsflächen oder Verbindungsabschnitte (22) gebildet sind.

5. Packerwalze zur Bodenbearbeitung nach Anspruch 3 oder 4, **dadurch gekennzeichnet, dass** die Montageflächen (20) im Nabenbereich (19) jeweils wenigstens eine Bohrung oder einen Ausschnitt aufweisen, mittels derer die jeweils wenigstens zwei Federelemente (14) an der Trägerwelle (11) oder am Trägerprofil (12) anbringbar sind, und dass hierzu zumindest ein Montageelement (26) mit der Trägerwelle (11) oder dem Trägerprofil (12) und zumindest einem Federelement (14) verbunden ist.

6. Packerwalze zur Bodenbearbeitung nach einem der Ansprüche 1 bis 5, **dadurch gekennzeichnet, dass** die Verbindungsflächen oder Speichenabschnitte (21) oder Verbindungsabschnitte (22) jeweils wenigstens eine zusätzliche Verbindungsstelle (28) aufweisen, mittels derer jeweils zwei gegenüberliegende Federelemente (14) aneinander fixiert und/oder miteinander verschraubt sind.

7. Packerwalze zur Bodenbearbeitung nach einem der Ansprüche 1 bis 6, **dadurch gekennzeichnet, dass** die zusätzliche Verbindungsstelle (28) in einem Bereich angeordnet ist, der innerhalb eines Außendurchmessers B der Umfangsfläche (18) liegt.

8. Packerwalze zur Bodenbearbeitung nach einem der Ansprüche 1 bis 7, **dadurch gekennzeichnet, dass** die zusätzliche Verbindungsstelle (28) in einem Bereich angeordnet ist, der in etwa einem halben Außendurchmesser C der Umfangsfläche (18) entspricht oder der zumindest geringfügig größer ist als ein halber Außendurchmesser C der Umfangsfläche (18).

9. Packerwalze zur Bodenbearbeitung nach einem der Ansprüche 1 bis 8, **dadurch gekennzeichnet, dass** die zusätzliche Verbindungsstelle (28) in einem Bereich angeordnet ist, der innerhalb oder gleich einem halben Außendurchmesser B der Umfangsfläche (18) vorgesehen ist.

10. Packerwalze zur Bodenbearbeitung nach einem der Ansprüche 1 bis 9, **dadurch gekennzeichnet, dass** jeweils wenigstens zwei gegenüberliegende Federelemente (14) an der Trägerwelle (11) oder am Trägerprofil (12) mittels wenigstens einer durch die Montageflächen (20) im Nabenbereich (19) und die Trägerwelle (11) oder das Trägerprofil (12) hindurchgehende Montageelemente (26) montiert werden oder montierbar sind.

11. Packerwalze zur Bodenbearbeitung nach Anspruch 10, **dadurch gekennzeichnet, dass** jeweils wenigstens zwei gegenüberliegende Federelemente (14) an der Trägerwelle (11) oder am Trägerprofil (12) mittels wenigstens zwei durch die Montageflächen (20) im Nabenbereich (19) und die Trägerwelle (11) oder das Trägerprofil (12) hindurchgehende Montageelemente (26) montiert werden oder montierbar sind, wobei die zwei Montageelemente (26) axial zueinander versetzt sind.

12. Packerwalze zur Bodenbearbeitung nach einem der Ansprüche 1 bis 11, **dadurch gekennzeichnet, dass** das Federelement (14) eine flache und/oder V-förmige und/oder U-förmige und/oder T-förmige Kontur aufweist.

13. Packerwalze zur Bodenbearbeitung nach einem der vorhergehenden Ansprüche 1 bis 12, **dadurch gekennzeichnet, dass** zumindest die Verbindungsfläche oder der Verbindungsabschnitt (22) eine quadratische und/oder dreieckige und/oder kreisförmig ausgeprägte Kontur aufweist.

## Claims

1. A packer roller (10) for soil tillage, comprising at least one carrier profile (12), which is formed by a rotatable carrier shaft (11), and on which a plurality of spring elements (14) are disposed each spaced apart from one another, wherein in each case at least two oppositely positioned spring elements (14) form a largely circular or a circular tread (16), wherein the spring elements (14) have at least an outer, essentially circular, circumferential surface (18), two inner mounting surfaces (20) corresponding at least in some sections to the contour of the carrier profile (12), as well as two connecting surfaces or connecting sections (22) extending between the outer circumferential surface (18) and the inner mounting surface (20), wherein in particular arc-shaped connecting sections are disposed in each case between the mounting surfaces (20) and the connecting surfaces or the connecting sections (22) and the circumferential surface in order to create a continuous spring element (14), wherein in each case at least two suchlike oppositely positioned spring elements (14) form a packer ring, wherein the mounting surfaces (20) are at least in some sections in surface contact with the outer circumference of the carrier profile (12) and/or bear flush on the outer circumference of the carrier profile (12), wherein the mounting surfaces (20) each have at least one bore or one cut-out, by means of which the in each case at least two spring elements (14) are mountable to the carrier profile (12), wherein at least one mounting element (26) is connected to the carrier profile (12) and to at least one spring element (14) for this purpose, **characterised in that** the connecting surfaces or connecting sections (22) each have at least one additional connecting point (28), by means of which in each case two oppositely positioned spring elements (14) are bolted and/or connected.

2. The packer roller for soil tillage according to claim 1, **characterised in that** the carrier shaft (11) or the carrier profile (12) carries a plurality of spring elements (14), in each case with ring segment-shaped roller rim section (15), which spring elements (14) are disposed each spaced apart from one another in longitudinal extension direction of the carrier shaft (11) or of the carrier profile (12), wherein in each case at least two spring elements (14) disposed oppositely positioned in approximately the same axial position on the carrier shaft (11) or on the carrier profile (12) together form a circular or approximately circular tread (16) with their ring segment-shaped roller rim sections (15) connecting to each other.

3. The packer roller for soil tillage according to claim 1 or 2, **characterised in that** the spring elements (14) each have a hub area (19), two spoke sections (21), and the ring segment-shaped roller rim section (15), wherein the ring segment-shaped roller rim sections (15) form an outer, essentially circular or circle segment-shaped circumferential surface (18).

4. The packer roller for soil tillage according to claim 3, **characterised in that** the hub area (19) is formed by two inner mounting surfaces (20) corresponding at least in some sections with the contour of the carrier shaft (11) or of the carrier profile (12), and **in that** the spoke sections (21) are formed by two connecting surfaces or connecting sections (22) extending between the outer circumferential surface (18) or the roller rim section (15) and the inner mounting surface (20) or the hub area (19).

5. The packer roller for soil tillage according to claim 3 or 4, **characterised in that** the mounting surfaces (20) each have at least one bore or one cut-out in the hub area (19), by means of which bore or cut-out the in each case at least two spring elements (14) are mountable to the carrier shaft (11) or to the carrier profile (12), and **in that** at least one mounting element (26) is connected to the carrier shaft (11) or the carrier profile (12) and to at least one spring element (14) for this purpose.

6. The packer roller for soil tillage according to one of the claims 1 to 5, **characterised in that** the connecting surfaces or spoke sections (21) or connecting sections (22) each have at least one additional connecting point (28), by means of which in each case two oppositely positioned spring elements (14) are fixed to each other and/or bolted to one another.

7. The packer roller for soil tillage according to one of the claims 1 to 6, **characterised in that** the additional connecting point (28) is disposed in a range that lies within an outer diameter B of the circumferential surface (18).

8. The packer roller for soil tillage according to one of the claims 1 to 7, **characterised in that** the additional connecting point (28) is disposed in a range that corresponds approximately to half an outer diameter C of the circumferential surface (18) or that is at least slightly larger than half an outer diameter C of the circumferential surface (18).

9. The packer roller for soil tillage according to one of the claims 1 to 8, **characterised in that** the additional connecting point (28) is disposed in a range that is provided within or that is equal to half an outer diameter B of the circumferential surface (18).

10. The packer roller for soil tillage according to one of the claims 1 to 9, **characterised in that** the in each case at least two oppositely positioned spring elements (14) are mounted or are mountable to the carrier shaft (11) or to the carrier profile (12) by means of at least one mounting element (26) passing through the mounting surfaces (20) in the hub area (19) and through the carrier shaft (11) or the carrier profile (12).

11. The packer roller for soil tillage according to claim 10, **characterised in that** the in each case at least two oppositely positioned spring elements (14) are mounted or are mountable to the carrier shaft (11) or to the carrier profile (12) by means of at least two mounting elements (26) passing through the mounting surfaces (20) in the hub area (19) and through the carrier shaft (11) or the carrier profile (12), wherein the two mounting elements (26) are axially offset in relation to each other.

12. The packer roller for soil tillage according to one of the claims 1 to 11, **characterised in that** the spring element (14) has a flat and/or V-shaped and/or U-shaped and/or T-shaped contour.

13. The packer roller for soil tillage according to one of the previous claims 1 to 12, **characterised in that** at least the connecting surface or the connecting section (22) has a contour that takes a square and/or triangular and/or circular shape.

## Revendications

1. Rouleau de compactage (10) destiné au travail du sol, comprenant au moins un profilé porteur (12) qui est constitué d'un arbre porteur (11) rotatif et sur lequel une pluralité d'éléments de suspension (14) sont agencés, tous espacés les uns des autres, au moins deux éléments de suspension (14) en vis-à-vis constituant respectivement une surface de roulement (16) essentiellement circulaire ou circulaire, les éléments de suspension (14) présentant au moins une surface circonférentielle (18) extérieure, sensiblement circulaire, deux surfaces de montage (20) intérieures correspondant au moins partiellement au contour du profilé porteur (12) ainsi que deux surfaces de liaison ou parties de liaison (22) s'étendant entre la surface circonférentielle (18) extérieure et la surface de montage (20) intérieure, des parties de liaison, chacune notamment en forme d'arc, étant agencées entre les surfaces de montage (20) et les surfaces de liaison ou les parties de liaison (22) et la surface circonférentielle pour créer un élément de suspension (14) d'un seul tenant, au moins deux éléments de suspension (14), en vis-à-vis de cette manière, constituant respectivement un anneau de compactage, les surfaces de montage (20) étant au moins partiellement en contact superficiel avec la circonférence extérieure du profilé porteur (12) et/ou affleurent par rapport à la circonférence extérieure du profilé porteur (12), les surfaces de montage (20) présentant chacune au moins un trou de perçage ou une découpure permettant d'attacher respectivement les au moins deux éléments de suspension (14) au profilé porteur (12), au moins un élément de montage (26) étant relié à cet effet au profilé porteur (12) et au moins à un élément de suspension (14), **caractérisé en ce que** les surfaces de liaison ou parties de liaison (22) présentent chacune au moins un point de solidarisation (28) supplémentaire permettant de visser et/ou de solidariser respectivement deux éléments de suspension (14) en vis-à-vis .

2. Rouleau de compactage destiné au travail du sol selon la revendication 1, **caractérisé en ce que** l'arbre porteur (11) ou le profilé porteur (12) porte une pluralité d'éléments de suspension (14) agencés chacun à distance les uns des autres dans le sens d'étirement longitudinal de l'arbre porteur (11) ou du profilé porteur (12), chacun doté de parties jante (15) en forme de segment annulaire, au moins respectivement deux éléments de suspension (14) agencés en vis-à-vis sur l'arbre porteur (11) ou le profilé porteur (12) dans une position axiale approximativement égale, constituant ensemble, avec leurs parties jante (15) en forme de segment annulaires se joignant de bout en bout, une surface de roulement (16) circulaire ou approximativement circulaire.

3. Rouleau de compactage destiné au travail du sol selon la revendication 1 ou 2, **caractérisé en ce que** chacun des éléments de suspension (14) présente une zone moyeu (19), deux parties de rayons (21) et la partie jante (15) en forme de segment annulaire, lesdites parties jante (15) en forme de segment annulaire constituant une surface circonférentielle (18) extérieure sensiblement circulaire ou en forme de segment circulaire.

4. Rouleau de compactage destiné au travail du sol selon la revendication 3, **caractérisé en ce que** la zone moyeu (19) est constituée de deux surfaces de montage (20) intérieures, correspondant au moins partiellement au contour de l'arbre porteur (11) ou du profilé porteur (12), et que les parties de rayons (21) sont constituées par deux surfaces de liaison ou parties de liaison (22) s'étendant entre la surface circonférentielle (18) extérieure ou la partie jante (15) et la surface de montage (20) intérieure ou la partie moyeu (19).

5. Rouleau de compactage destiné au travail du sol selon la revendication 3 ou 4, **caractérisé en ce que** les surfaces de montage (20) présentent chacune, dans la zone moyeu (19), au moins un trou de perçage ou une découpure permettant d'attacher respectivement lesdits au moins deux éléments de suspension (14) à l'arbre porteur (11) ou au profilé porteur (12), et que à cet effet, au moins un élément de montage (26) est solidarisé à l'arbre porteur (11) ou au profilé porteur (12) et à au moins un élément de suspension (14).

6. Rouleau de compactage destiné au travail du sol selon l'une quelconque des revendications 1 à 5, **caractérisé en ce que** les surfaces de liaison ou parties de rayons (21) ou parties de liaison (22) présentent chacune au moins un point de solidarisation (28) supplémentaire permettant respectivement de fixer l'un à l'autre et/ou de visser l'un à l'autre deux éléments de suspension (14) en vis-à-vis.

7. Rouleau de compactage destiné au travail du sol selon l'une quelconque des revendications 1 à 6, **caractérisé en ce que** le point de solidarisation (28) supplémentaire est agencé dans une zone qui se trouve au sein d'un diamètre extérieur B de la surface circonférentielle (18).

8. Rouleau de compactage destiné au travail du sol selon l'une quelconque des revendications 1 à 7, **caractérisé en ce que** le point de solidarisation (28) supplémentaire est agencé dans une zone qui correspond à environ un demi diamètre extérieur C de la surface circonférentielle (18) ou qui est au moins légèrement supérieur à un demi diamètre extérieur C de la surface circonférentielle (18).

9. Rouleau de compactage destiné au travail du sol selon l'une quelconque des revendications 1 à 8, **caractérisé en ce que** le point de solidarisation (28) supplémentaire est agencé dans une zone qui est prévue au sein de ou égale à un demi diamètre extérieur B de la surface circonférentielle (18).

10. Rouleau de compactage destiné au travail du sol selon l'une quelconque des revendications 1 à 9, **caractérisé en ce qu'**au moins deux éléments de suspension (14) en vis-à-vis sont respectivement montés ou susceptibles d'être montés sur l'arbre porteur (11) ou le profilé porteur (12) à l'aide d'au moins un élément de montage (26) traversant les surfaces de montage (20) dans la zone moyeu (19) et l'arbre porteur (11) ou le profilé porteur (12).

11. Rouleau de compactage destiné au travail du sol selon la revendication 10, **caractérisé en ce qu'**au moins deux éléments de suspension (14) en vis-à-vis sont respectivement montés ou susceptibles d'être montés sur l'arbre porteur (11) ou le profilé porteur (12) à l'aide d'au moins deux éléments de montage (26) traversant les surfaces de montage (20) dans la zone moyeu (19) et l'arbre porteur (11) ou le profilé porteur (12), les deux éléments de montage (26) étant décalés axialement l'un par rapport à l'autre.

12. Rouleau de compactage destiné au travail du sol selon l'une quelconque des revendications 1 à 11, **caractérisé en ce que** l'élément de suspension (14) présente un contour plat et/ou en V et/ou en U et/ou en T.

13. Rouleau de compactage destiné au travail du sol selon l'une quelconque des revendications précédentes 1 à 12, **caractérisé en ce qu'**au moins la surface de liaison ou la partie de liaison (22) présente un contour carré et/ou triangulaire et/ou de forme circulaire.
